Europäisches Patentamt

European Patent Office

Office européen des brevets

(19)

(11) **EP 0 938 742 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(21) Anmeldenummer: **97943906.4**

(22) Anmeldetag: **26.09.1997**

(51) Int Cl.$^7$: **H01J 49/40**, B01J 8/00

(86) Internationale Anmeldenummer:
**PCT/EP1997/005278**

(87) Internationale Veröffentlichungsnummer:
**WO 1998/016949 (23.04.1998 Gazette 1998/16)**

(54) **VERFAHREN UND VORRICHTUNG ZUM ERKENNEN DER KATALYTISCHEN AKTIVITÄT VON FESTSTOFFEN**

METHOD AND DEVICE FOR REVEALING A CATALYTIC ACTIVITY BY SOLID MATERIALS

PROCEDE ET DISPOSITIF DE MISE EN EVIDENCE D'UNE ACTIVITE CATALYTIQUE DE MATIERES SOLIDES

(84) Benannte Vertragsstaaten:
**AT BE CH DE FR GB IT LI NL**

(30) Priorität: **11.10.1996 DE 19642261**

(43) Veröffentlichungstag der Anmeldung:
**01.09.1999 Patentblatt 1999/35**

(73) Patentinhaber: **Degussa AG**
**40474 Düsseldorf (DE)**

(72) Erfinder:
• **WINDHAB, Norbert**
**D-65795 Hattersheim (DE)**
• **MICULKA, Christian**
**D-65929 Frankfurt am Main (DE)**
• **HOPPE, Hans-Ulrich**
**D-65929 Frankfurt am Main (DE)**

(74) Vertreter: **Ackermann, Joachim, Dr.**
**Postfach 11 13 26**
**60048 Frankfurt am Main (DE)**

(56) Entgegenhaltungen:
**EP-A- 0 266 334          US-A- 5 498 545**

• **PATENT ABSTRACTS OF JAPAN vol. 009, no. 037 (P-335), 16.Februar 1985 -& JP 59 178358 A (HIROYOSHI INOUE), 9.Oktober 1984,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Erkennen der katalytischen Aktivität von Feststoffen bei dem man ein oder mehrere Edukte in Gegenwart der Feststoffe zur Reaktion bringt.

Verfahren der genannten Art sind dem Fachmann aus industriellen Anwendungen bekannt.

Diese Verfahren haben die Nachteile, daß große Substanzmengen und durch serielle Testung viel Zeit für sich wiederholende Schritte benötigt werden.

Im Rahmen der sogenannten "Kombinatorischen Chemie" werden Bibliotheken von Substanzen hergestellt, wobei gleichzeitig viele Substanzen synthetisiert werden, allerdings in geringen Mengen ( P. G. Schultz et al., Science 1995, 1738; Michael J. Natan, J. Am. Chem. Soc. 118, 1996, 8721-8722).

Weiterhin ist aus JP 59 178358 A (Patent Abstracts of Japan, Vol. 009, No. 037, 335, 16.02.1985) ein paralleles Analyseverfahren mittels Massenspektrometrie bekannt. Dabei werden einzelne Feststoffe auf eine höhere Temperatur gebracht, die dann zur Reaktion kommen. Ein solches Analyseverfahren ist allerdings nur beschränkt für ein Aktivitätsscreening einsetzbar.

Der Erfindung lag daher die Aufgabe zugrunde, ein Verfahren bereitzustellen, das mit geringeren Substanzmengen als bisher für ein reines Aktivitätsscreening auskommt und eine schnellere Untersuchung der Feststoffe erlaubt.

Diese Aufgabe wird durch ein Verfahren der eingangs genannten Art gelöst, das dadurch gekennzeichnet ist, daß die Feststoffe voneinander örtlich getrennt auf einem Träger vorliegen, daß man die Edukte mit den Feststoffen in Kontakt bringt , daß man das oder die entstehenden Produkte mit einem Massenspektrometer bezüglich der Feststoffe auf dem Träger ortsaufgelöst analysiert und daß man zur ortsauflösenden Analyse das oder die entstehenden Produkte mit einen laser ortsaufgelöst ionisiert.

Gegenstand der Erfindung ist daher ein Verfahren (und Vorrichtung zum Erkennen der katalytischen Aktivität von Feststoffen bei dem man ein oder mehrere Edukte in Gegenwart der Feststoffe zur Reaktion bringt, dadurch gekennzeichnet, daß die Feststoffe voneinander örtlich getrennt auf einem Träger vorliegen, daß man die Edukte mit den Feststoffen in Kontakt bringt daß man das oder die entstehenden Produkte mit einem Massenspektrometer bezüglich der Feststoffe auf dem Träger ortsaufgelöst analysiert und daß man zur ortsauflösenden Analyse das oder die entstehenden Produkte mit einem laser ortsaufgelöst ionisiert.

Bevorzugte Ausführungsformen des erfindungsgemäßen Verfahrens ergeben sich aus den jeweiligen Unteransprüchen.

Erfindungsgemäß wird zur Analyse ein Massenspektrometer verwendet. Massenspektrometer lassen eine Analytik bis hin zu wenigen Molekülen zu, auch Substanzgemische und Isotopengemische lassen sich direkt analysieren.

Eine erste bevorzugte Ausführungsform der Erfindung ist dadurch gekennzeichnet, daß mehrere Feststoffe, bevorzugt mehr als 20, ganz besonders bevorzugt mehr als 100, voneinander getrennt auf einem Träger vorliegen und dadurch gleichzeitig untersucht werden können.

In einer zweiten bevorzugten Ausführungsform können die Feststoffe beheizt oder gekühlt werden.

Eine weitere bevorzugte Ausführungsform besteht darin, daß das Massenspektrometer ein TOF-(Time of Flight) Massenspektrometer (Anordnung nach W. C. Wiley and I. H. McLaren Rev. Sci. Instr. 26, 12 1955, 1150-1157). ist. Es kann zur Analyse mit dem Massenspektrometer bevorzugt ein Multi-Channel-Plate-(MCP-) Detektor verwendet werden, besonders bevorzugt ein ortsauflösender MCP-Detektor (MCP-Array mit Phosphorschirm bzw. Fluoreszenzschirm), da dann gleichzeitig die Reaktionen an verschiedenen Stellen des obengenannten Trägers analysiert werden können.

In einer weiteren bevorzugten Ausführungsform der Erfindung wird die Reaktion in einer ersten Vakuumkammer durchgeführt und die Analyse in einer zweiten Vakuumkammer, wobei beide Kammern durch eine Blende getrennt sind. Dies erlaubt eine erhöhte Beströmungsrate des Trägers, um sicherzugehen, daß genug Edukt mit dem Feststoff in Kontakt gebracht werden kann, ohne den spektroskopischen Untergrund durch Gasziafuhr zu sehr anzuheben. Es kann im Analysenraum oder im Reaktionsraum mittels Vakuumpumpen ein Druck $\leq 10^{-5}$ mbar, besonders bevorzugt $\leq 10^{-6}$ mbar, ganz besonders bevorzugt $\leq 10^{-7}$ mbar, eingestellt werden. Im Reaktionsraum kann der wahre Druck unmittelbar über den Feststoffen je nach Beströmung bis zu Atmosphärendruck vom Vakuum abweichen. Feste Edukte oder Edukte mit besonders geringem Dampfdruck können auch direkt vor Evakuierung des Systems durch - vom Fachmann Batch-Verfahren genannten - einmaligen Auftragen mit dem potentiell katalytisch aktiven Feststoff in Kontakt gebracht werden.

Eine weitere bevorzugte Ausführungsform ist dadurch gekennzeichnet, daß der oder die einzelnen Feststoffe in einer Menge kleiner als 1 mg, bevorzugt kleiner als 0,1 mg, besonders bevorzugt kleiner als 0,01 mg, ganz besonders bevorzugt kleiner 0.001 mg, vorliegen. Dies ermöglicht ein Aktivitätsscreening an eingangs genannten, literaturbekannten Substanzbibliotheken (Pools).

Als zusätzliche Ausführungsformen der Analyse kann man auch eine Einrichtung zum Fokussieren des Molekularstrahls verwenden, um z. B. in einem ortsauflösenden Detektor die Zuordnung der Reaktionsprodukte zu den einzelnen Trägerpositionen (Feststoffe) durch die Blende zu ermöglichen.

Eine fragmentierungsarme Ionisation der Produkte durch Laserpuls (T. Baumert, J. L. Herek, A. H. Zeweil J. Chem. Phys, 99 (6), 1993, 4430-4440), die verhindert, daß Produktmoleküle vor Erreichen des Detektors in leichtere Fragmente zerfallen und so die Produktanalytik verfälschen.

Die Vorteile des erfindungsgemäßen Verfahrens sind im wesentlichen darin zu sehen, daß nunmehr ein schnelles serielles oder paralleles Erkennen der katalytischen Aktivität von Feststoffen bei kleinsten Mengen unter identischen Bedingungen möglich ist.

Zur Durchführung der erfindungsgemäßen Verfahren eignet sich besonders eine Vorrichtung enthaltend eine oder mehrere Vakuumkammem, einen Katalysatorträger und ein Massenspektrometer.

Es eignet sich weiter besonders eine Vorrichtung, die Gegenstand der Erfindung ist, aufweisend eine Vakuumkammer, an der ein Massenspektrometer angeordnet ist und die mindestens einen Eingang für Gas aufweist, dadurch gekennzeichnet, daß der Träger für Feststoffe mindestens eine Kapillare aufweist, wobei die Zahl der Kapillaren jede ganze Zahl von 1 bis mindestens 100 sein kann.

Eine erste besondere Ausgestaltung dieser Vorrichtung ist dadurch gekennzeichnet, daß die oder jede Kapillare einen Durchmesser aus dem Bereich von 5 bis 100, bevorzugt 10 bis 50 µm hat. Bei geeigneter Wahl von Durchmesser und Länge der Kapillare(n) kann das Gas auch mit Atmosphärendruck und auch mit Überdruck (größer als 1 bar absolut) auf die Feststoffe geleitet werden.

Eine zweite besondere Ausgestaltung dieser Vorrichtung ist dadurch gekennzeichnet, daß der oder jeder Träger die Form einer Platte hat und zu dem Detektorteil des Massenspektrometers in einem Winkel von 30 bis 60°, bevorzugt 45° geneigt ist.

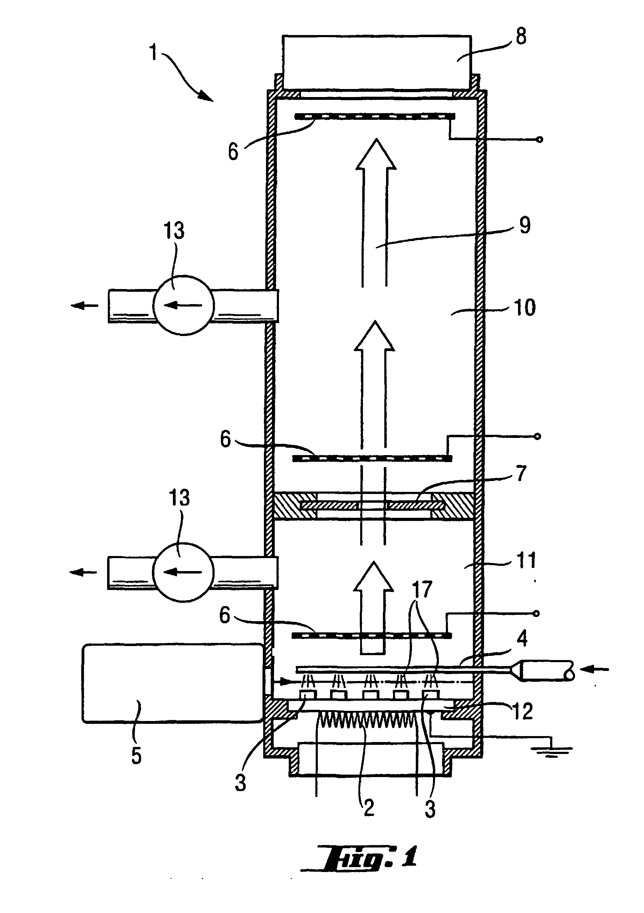

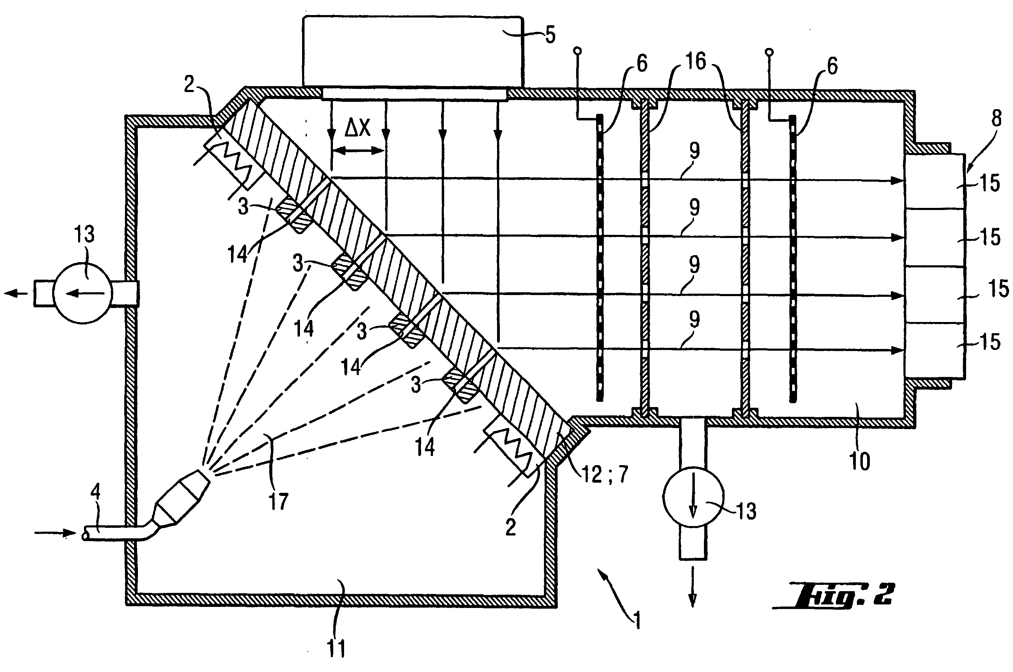

Im folgenden wird eine Ausführungsform des erfindungsgemäßen Verfahrens anhand der in den Figuren 1 und 2 dargestellten Skizze der erfindungsgemäßen Vorrichtungen näher erläutert, ohne daß dadurch beabsichtigt ist, die Erfindung in irgendeiner Weise zu beschränken.

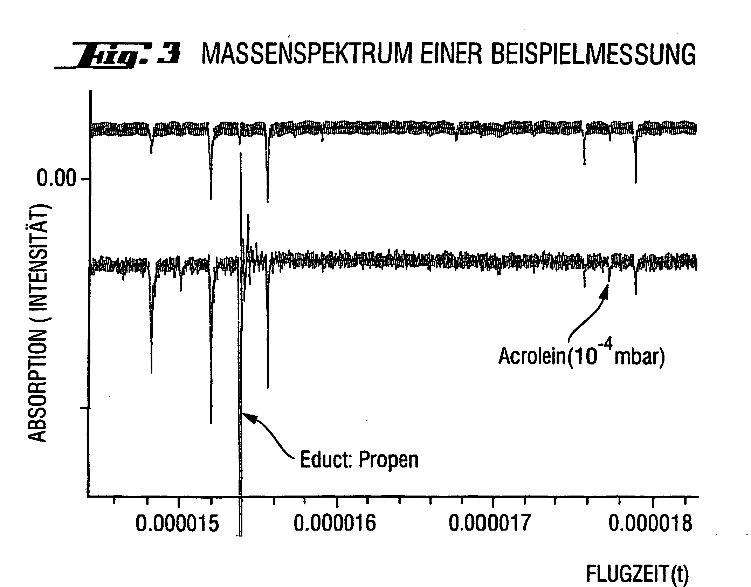

Die Fig. 1 zeigt eine schematische Darstellung einer Vorrichtung zur Durchführung des erfindungsgemäßen Verfahrens, Fig. 2 eine Prinzipskizze eines Beispiels einer Anordnung zur ortsauflösenden Analyse, Fig. 3 das Massenspektrum einer Beispielmessung.

Die Vorrichtung 1 weist zwei Hochvakuumkammern 10,11 auf, von denen vor allem die Kammer 11 nicht immer auf Hochvakuum evakuiert zu sein braucht. Die Evakuierung erfolgt mittels Pumpen 13. Die Feststoffe 3 befinden sich auf einem Träger 12, der mit einer Heizung 2 ausgerüstet ist. Die Feststoffe 3 liegen voneinander räumlich getrennt vor, z.B. in Form von Filmflecken. Weiter ist eine Eduktgemischkapillare 4 mit mehreren Öffnungen zur Beströmung der Feststoffe 3 mit gasförmigen Edukten 17 vorhanden, ein Ionisations-Laser 5, gepulste Beschleunigungselektroden 6 und eine Blende 7, die im Zusammenwirken einen Molekular(-ionen-)strahl 9 erzeugen, der mit einem MCP-Detektor 8, analysierbar ist. Die übliche Elektronik zur Steuerung und Datenerfassung ist nicht aufgeführt.

Durch die Eduktgemischkapillare 4 wird ein gasförmiges Eduktgemisch 17 auf die zu untersuchenden Feststoffe 3 geleitet, die sich in der Hochvakuumkammer 11 befinden. Dabei ist es günstig, daß die Kapillaröffnungen sehr nahe an den Feststoffpositionen des Trägers 12 positioniert sind. Dadurch kann der wahre Druck unmittelbar an den Feststoffen 3 beträchtlich vom Hochvakuum abweichen, je nach Eduktstrom 17 bis auf Atmosphärendruck. Durch den Kontakt der Edukte 17 mit einem katalytisch aktiven Feststoff 3 entsteht ein Produkt oder ein Produktgemisch, das (im speziellen Fall) durch den gepulsten Laser 5 ionisiert wird. Der über die gepulsten (Trigger-) Elektroden 6 beschleunigte, ionisierte Molekularstrahl 9 wird im MCP-Detektor 8 detektiert. Unterschiedliche Masse erzeugt unterschiedliche Flugzeit woraus man in bekannter Weise ein herkömmliches Massenspektrum erhält.

Im Fall der besonderen Ausgestaltung gemäß Fig.2 sind Blende 7 und Träger 12 vereinigt. Das Produktgemisch gelangt durch Kapillaren 14, die sich in der Blende 7 (dem Träger 12) befinden und in den Feststoffen fortgesetzt sind und die einen genügend hohen Druckabfall zwischen den Kammern 10,11 erzeugen, in die Kammer 10 zur Analyse. Der Detektor 8 weist mehrere Kanäle 15 auf, die mittels eines Blendensystems 16 den Positionen der Feststoffe 3 auf dem Träger 12 zugeordnet sind. Infolge der geneigten Anordnung der Blende 7 relativ zum Detektor 8 kann über die um ΔX unterschiedlichen Abstände der einzelnen Festoffpositionen aus der daraus resultierenden, um Δt unterschiedlichen Flugzeit t der einzelnen Ionen ebenfalls auf die Position des zum detektierten Signals gehörigen Feststoffs 3 geschlossen werden. Eine andere Möglichkeit, die Position zu bestimmen, ist, die einzelnen Feststoffpositionen, d.h. die Ausgänge der jeweiligen Kapillaren 14 einzeln mit dem Laser zu ionisieren.

Das nachfolgend beschriebene Experiment demonstriert bezugnehmend auf Fig. 2 beispielhaft die vorzüglichen Eigenschaften der Erfindung.

Ein bekannter Katalysator (Sohio-Kat zur Acrolein-Synthese durch Luftoxidation von Propen) wurde auf einem Träger (12,7) über eine kurze Kapillare (14) mit einem Durchmesser zwischen 10-50 µm direkt mit einer Vakuumkammer (10) verbunden, so daß der Katalysator (3) mit etwas Überdruck mit einem Eduktgemisch 17 aus

| 30,2 Vol. % | Propylen 2.5 |
|---|---|
| 15,2 Vol. % | Sauerstoff 4.5 |
| Rest | Stickstoff 5.0 |

begast werden konnte, ohne daß der Detektor durch den Gashintergrund gesättigt wurde. Geheizt wurde die ganze Halterung von außen mit einem Platindrahtwendel (2) mit Konstant-Speisespannung, unter der Kontrolle eines handelsüblichen Thermoelements.

Zur Anregung wurde ein Titan-Saphir-LASER (5) mit CPA-Verstärkung verwendet, der über eine Linse (nicht gezeigt) auf die Kapillaröffnung in Kammer 10 gelenkt wurde. Detektiert wurde mit einer 1-Zoll-MCP-PLATE, die Flugzeit wurde mit einem handelsüblichen GHz-Oszilloskop registriert.

Mit bekannten Restgas-Massen wurde die TOF-Massen-Korrelation im Bereich von 0 - 60 amu (atomic mass unit) geeicht:

$$m \approx k \cdot t^2$$

$$k = \text{Eichkonstante in } \frac{amu}{\mu s^2} \quad \text{mit } k \sim \frac{1}{X^2}$$

$$X = \text{Abstand zwischen Ionenquelle und Detektor}$$

Während das Produktsignal (Acrolein) während der Begasung um Größenordnungen über dem Hintergrund des Restgasspektrums lag, konnte ein relativ schnelles Abklingen nach Abschaltung der Begasung bestimmt werden.

Die Fig. 3 zeigt den Vergleich der kleinsten noch über dem Restgas zweifelsfrei nachweisbaren Produktanteil 10 Sekunden nach Begasungsstop (unteres Spektrum) und dem Restgasspektrum (oberes Spektrum). So kann die Begasung auch zur (langsameren) Ortsauflösung genutzt werden.

## Patentansprüche

1. Verfahren zum Erkennen der katalytischen Aktivität von Feststoffen (3), die voneinander örtlich getrennt auf einem Träger (12) vorliegen, bei dem man ein oder mehrere Edukte in Gegenwart der Feststoffe (3) zur Reaktion bringt und das oder die entstehenden Produkte mit einem Massenspektrometer (8) bezüglich der Feststoffe (3) auf dem Träger (12) ortsaufgelöst analysiert, **dadurch gekennzeichnet, daß** man zur ortsauflösenden Analyse das oder die entstehenden Produkte Produkte mit einem Laser (5) ortsaufgelöst ionisiert.

2. Verfahren nach Anspruch 1, **dadurch gekennzeichnet, daß** man die Reaktion in einer ersten Vakuumkammer (11) durchführt und die Analyse in einer zweiten Vakuumkammer (10), wobei beide Kammern durch eine Blende (7) getrennt sind.

3. Verfahren nach einen oder mehreren der Ansprüche 1 oder 2, **dadurch gekennzeichnet, daß** im Raum zur Analyse der Produkte oder im Reaktionsraum ein Druck $\leq 10^{-5}$ mbar eingestellt wird.

4. Verfahren nach einen oder mehreren der Ansprüche 1 bis 3, **dadurch gekennzeichnet, daß** die Masse an einzelnem Feststoff weniger als 1 mg beträgt.

5. Verfahren nach einen oder mehreren der Ansprüche 1 bis 4, **dadurch gekennzeichnet, daß** die Masse an einzelnem Feststoff weniger als 0,1 mg beträgt.

6. Verfahren nach Anspruch 1 mittels einer Fokusiereinrichtung einem ortsauflösenden Detektor (8) eines Massenspektrometers zuführt.

7. Verfahren nach Anspruch 6, **dadurch gekennzeichnet, daß** man als Fokusiereinrichtung eine Blende (16) verwendet, die zwischen zwei Beschleunigungselektroden (6) angeordnet ist.

8. Verfahren nach Anspruch 6 oder 7, **dadurch gekennzeichnet, daß** man zur Ionisation einen gepulsten Laser verwendet.

9. Verfahren nach Anspruch 1, **dadurch gekennzeichnet, daß** man zur ortsauflösenden Analyse einen ortsauflösenden Detektor (8) mit mehreren Kanälen (15) verwendet und einer Position eines Feststoffes (3) auf dem Träger (12) mittels eines Blendensystems (16) einen Kanal (15) des Detektors (8) zuordnet, und durch das Blendensystem(16) dem Detektor zur Analyse zuführt.

10. Verfahren nach Anspruch 1, **dadurch gekennzeichnet, daß** man zur ortsauflösenden Analyse die Positionen der Festoffe (3) in unterschiedliche Abstände zu dem Detektor des Massenspektrometers (8) bringt, die Produkte mit einem Laser ortsaufgelöst gepulst ionisiert und die resultierende, unterschiedlichen Flugzeit der Ionen zur Ermittlung der Position des zugehörigen Feststoffs verwendet.

11. Vorrichtung zur Durchführung des Verfahrens nach einem oder mehreren der Ansprüche 1 bis 5, aufweisend eine Vakuumkammer (10), an der der Detektor (8) eines Massenspektrometers angeordnet ist, einen Träger (12) zur Aufnahme von Festoffen (3), mindestens einen Eingang (4) durch den Edukte (17) mit den Festoffen in Kontakt gebracht werden können, sowie einen Laser (5), zur ortsaufgelösten Ionisation der entstehenden Produkte (9).

12. Vorrichtung nach Anspruch 11, aufweisend eine erste Vakuumkammer (10), an der der Detektor (8) eines Massenspektrometers sowie ein Laser (5) zur ortsaufgelösten Ionisation der-zu analysierenden Produkte angeordnet ist, eine zweite Vakuumkammer (11), die von der ersten Vakuumkammer (10) durch einen Träger (12) zur Aufnahme von Feststoffen (3) getrennt ist und die einen Eingang (4) für Edukte (17) aufweist, wobei der Träger (12) Kapillaren (14) enthält, durch die die zu analysierenden Produkte in die Vakuumkammer (10) einleitbar sind und wobei der Laser (5) so angeordnet ist, daß die Ausgänge der Kapillaren (14) einzeln ionisierbar sind.

13. Vorrichtung nach Anspruch 12, **dadurch gekennzeichnet, daß** die oder jede Kapillare (14) einen Durchmesser aus dem Bereich von 5 bis 100, bevorzugt 10 bis 50 µm hat.

14. Vorrichtung nach einem der Ansprüche 11 bis 13, **dadurch gekennzeichnet, daß** der oder jeder Träger (12) die Form einer Platte hat und zu dem Detektorteil (8) des Massenspektrometers in einem Winkel von 30 bis 60°, bevorzugt 45° geneigt ist.

15. Vorrichtung nach Anspruch 11 zur Durchführung des Verfahrens nach einem oder mehreren der Ansprüche 6 bis 9, aufweisend eine erste Vakuumkammer (10), an der ein ortsauflösender Detektor (8) eines Massenspektrometers angeordnet ist und die eine erste Elektrode (6) enthält, eine zweite Vakuumkammer (11), die mit der ersten Kammer (10) durch eine Blende (7) verbunden ist, einen Träger (12) zur Aufnahme von Feststoffen (3), einen Eingang (4) für Edukte (17) und eine zweite Elektrode (6) enthält und an der ein Laser (5) zur ortsaufgelösten Ionisation der zu analysierenden Produkte angeordnet ist, wobei die erste und zweite Elektrode (6) und die Blende (7) so angeordnet und elektrisch miteinander verbunden sind, daß die ionisierten Produkte auf den ortsauflösenden Detektor (8) fokussierbar sind.

16. Vorrichtung nach Anspruch 11 zur Durchführung des Verfahrens nach Anspruch 10, aufweisend eine Vakuumkammer (10), an der der Detektor (8) eines Massenspektrometers sowie ein Laser zur ortsaufgelösten Ionisation der zu analysierenden Produkte angeordnet ist, sowie einen Träger (12) zur Aufnahme von Feststoffen (3) auf örtlich voneinander getrennten Positionen, wobei der Träger (3) relativ zum Detektor geneigt ist, so daß die einzelnen Feststoffpositionen in unterschiedlichen Abständen relativ zum Detektor (8) angeordnet sind.

**Claims**

1. Process for detecting the catalytic activity of solid materials (3), which are present, spatially separated from one another, on a support (12), in which process one or more starting materials are brought to reaction in the presence of the solid materials (3), and the resultant product or products are analyzed by a mass spectrometer (8), with resolution of location regarding the solid materials (3) on the support (12), **characterized in that**, for the location-resolving analysis, the resultant product or products are ionized by a laser (5) with resolution of location.

2. Process according to Claim 1, **characterized in that** the reaction is carried out in a first vacuum chamber (11) and the analysis in a second vacuum chamber (10), the two chambers being separated by an orifice plate (7).

3. Process according to one or both of Claims 1 and 2, **characterized in that**, in the compartment for the analysis of the products, or in the reaction compartment, a pressure $\leq 10^{-5}$ mbar is set.

4. Process according to one or more of Claims 1 to 3, **characterized in that** the mass of individual solid material is less than 1 mg.

5. Process according to one or more of Claims 1 to 4, **characterized in that** the mass of individual solid material is less than 0.1 mg.

6. Process according to Claim 1, **characterized in that** the resultant product or products are fed to a location-resolving detector (8) of a mass spectrometer by means of a focusing device.

7. Process according to Claim 6, **characterized in that**, as focusing device, use is made of an orifice plate (16) which is arranged between two acceleration electrodes (6).

8. Process according to Claim 6 or 7, **characterized in that**, for the ionization, use is made of a pulsed laser.

9. Process according to Claim 1, **characterized in that** for the location-resolving analysis, use is made of a location-resolving detector (8) having a plurality of channels (15) and a position of a solid material (3) on the support (12) is assigned by an orifice plate system (16) a channel (15) of the detector (8), and the products are fed through the orifice plate system (16) to the detector for the analysis.

10. Process according to Claim 1, **characterized in that** for the location-resolving analysis, the positions of the solid materials (3) are brought at different distances to the detector of the mass spectrometer (8), the products are ionized in pulses by a laser with resolution of location and the resulting, different time of flight of the ions is used to determine the position of the associated solid material.

11. Apparatus for carrying out the process as claimed in one or more of Claims 1 to 5, having a vacuum chamber (10), on which the detector (8) of a mass spectrometer is arranged, a support (12) for receiving solid materials (3), at least one inlet (4) through which starting materials (17) can be brought into contact with the solid materials, and a laser (5) for the location-resolved ionization of the resultant products (9).

**12.** Apparatus according to Claim 11, having a first vacuum chamber (10) on which is arranged the detector (8) of a mass spectrometer and a laser (5) for the location-resolved ionization of the products to be analyzed, a second vacuum chamber (11), which is separated from the first vacuum chamber (10) by a support (12) for receiving solid materials (3) and which has an inlet (4) for starting materials (17), the support (12) comprising capillaries (14), through which the products to be analyzed can be introduced into the vacuum chamber (10) and the laser (5) being arranged in such a manner that the outlets of the capillaries (14) can be ionized individually.

**13.** Apparatus according to Claim 12, **characterized in that** the capillary or each capillary (14) has a diameter from the range 5 to 100, preferably 10 to 50, μm.

**14.** Apparatus according to one of Claims 11 to 13, **characterized in that** the support or each support (12) has the shape of a plate and is inclined to the detector part (8) of the mass spectrometer at an angle of 30 to 60°, preferably 45°.

**15.** Apparatus according to Claim 11 for carrying out the process according to one or more of Claims 6 to 9, having a first vacuum chamber (10), on which a location-resolving detector (8) of a mass spectrometer is arranged and which comprises a first electrode (6), a second vacuum chamber (11) which is connected to the first chamber (10) by an orifice plate (7), comprises a support (12) for receiving solid materials (3), an inlet (4) for starting materials (17) and a second electrode (6) and on which is arranged a laser (5) for the location-resolved ionization of the products to be analyzed, the first and second electrodes (6) and the orifice plate (7) being arranged and electrically connected to one another in such a manner that the ionized products can be focused onto the location-resolving detector (8).

**16.** Apparatus according to Claim 11 for carrying out the process according to Claim 10, having a vacuum chamber (10) on which is arranged the detector (8) of a mass spectrometer and a laser for the location-resolved ionization of the products to be analyzed, and a support (12) for receiving solid materials (3) in spatially separated positions, the support (3) being inclined relative to the detector so that the individual solid material positions are arranged at different distances relative to the detector (8).

**Revendications**

**1.** Procédé de reconnaissance de l'activité catalytique de solides (3) qui se trouvent séparés localement les uns des autres sur un support (12) ; sur lequel on fait réagir un ou plusieurs réactifs en présence des solides (3) et on analyse en dissolution locale le ou les produits créés avec un spectromètre de masse (8) relativement aux solides (3) sur le support (12), **caractérisé en ce qu'**on ionise en dissolution locale le ou les produits créés avec un laser (5) pour l'analyse en dissolution locale.

**2.** Procédé selon la revendication 1, **caractérisé en ce que** l'on effectue la réaction dans une première chambre à vide (11) et l'analyse dans une deuxième chambre à vide (10), les deux chambres étant séparées par un écran (7).

**3.** Procédé selon l'une des revendications 1 ou 2, **caractérisé en ce que** dans la pièce pour l'analyse des produits ou dans la salle de réaction la pression est réglée à $\leq 10^{-5}$ mbars.

**4.** Procédé selon l'une des revendications 1 à 3, **caractérisé en ce que** la masse d'un produit isolé est inférieure à 1 mg.

**5.** Procédé selon l'une des revendications 1 à 4, **caractérisé en ce que** la masse d'un solide isolé est inférieure à 0,1 mg.

**6.** Procédé selon la revendication 1, **caractérisé en ce que** l'on ajoute un détecteur (8) en dissolution locale à un spectromètre de masse au moyen d'un dispositif focalisant.

**7.** Procédé selon la revendication 6, **caractérisé en ce que** l'on utilise comme dispositif focalisant un écran (16) qui est disposé entre deux électrodes accélératrices (6).

**8.** Procédé selon la revendication 6 ou 7, **caractérisé en ce que** l'on utilise pour l'ionisation un laser à impulsion.

**9.** Procédé selon la revendication 1, **caractérisé en ce que** l'on utilise pour l'analyse en dissolution locale un détecteur en dissolution locale (8) avec plusieurs canaux (15) et que l'on attribue un canal (15) du détecteur (8) à une position d'un solide (3) sur le support (12) au moyen d'un système d'écrans (16) et que l'on conduit le détecteur à travers le système d'écrans (16) pour l'analyse.

**10.** Procédé selon la revendication 1, **caractérisé en ce que** l'on amène les positions des solides (3) pour l'analyse en dissolution locale à des distances différentes du détecteur du spectromètre de masse (8), que l'on ionise par impulsion en dissolution locale les produits avec un laser et que l'on utilise la durée de trajet différente résultante des ions à la recherche de la position du solide associé.

**11.** Dispositif de réalisation du procédé selon une ou plusieurs des revendications 1 à 5, comportant une chambre à vide (10), sur laquelle est disposé le détecteur (8) d'un spectromètre de masse, un support (12) pour recevoir les solides (3), au moins une entrée (4) par laquelle des réactifs (17) peuvent être mis en contact avec les solides sont mis en contact, ainsi qu'un laser (5) pour l'ionisation en dissolution locale des produits (9) créés.

**12.** Dispositif selon la revendication 11, comprenant une première chambre à vide (10) sur laquelle le détecteur (8) d'un spectromètre de masse ainsi qu'un laser (5) pour l'ionisation en dissolution locale des produits à analyser sont disposés, une deuxième chambre à vide (11) séparée de la première chambre à vide (10) par un support (12) pour recevoir les solides (3) et qui comporte une entrée (4) pour les réactifs (17), le support (12) contenant des capillaires (14) par lesquels les produits à analyser peuvent être introduits dans la chambre à vide (10) et le laser (5) étant dispose de façon à ce que les sorties des capillaires (14) soient ionisables individuellement.

**13.** Dispositif selon la revendication 12, **caractérisé en ce que** le ou les capillaires (14) ont un diamètre de l'ordre de 5 à 100, de préférence 10 à 50 μm.

**14.** Dispositif selon l'une des revendications 11 à 13, **caractérisé en ce que** le ou chaque support (12) a la forme d'un disque et est incliné par rapport à l'élément détecteur (8) du spectromètre de masse d'un angle de 30 à 60°, de préférence 45°.

**15.** Dispositif selon la revendication 11 pour la réalisation du procédé selon une ou plusieurs des revendications 6 à 9, comportant une première chambre à vide (10) sur laquelle est disposé un détecteur (8) en dissolution locale d'un spectromètre de masse, et qui contient une première électrode (6), une deuxième chambre à vide (11) qui est reliée à la première chambre (10) par un écran (7), un support (12) pour recevoir les solides (3), une entrée (4) pour les réactifs (17) et une deuxième électrode (6), et sur laquelle est disposé un laser (5) pour l'ionisation en dissolution locale des produits à analyser, la première et la deuxième électrode (6) et l'écran (7) étant disposés et électriquement reliés de façon à ce que les produits ionisés puissent être focalisés sur le détecteur (8) en dissolution locale.

**16.** Dispositif selon la revendication 11 pour la réalisation du procédé selon la revendication 10, comportant une chambre à vide (10) sur laquelle est disposé le détecteur (8) d'un spectromètre de masse ainsi qu'un laser pour l'ionisation en dissolution locale des produits à analyser, ainsi qu'un support (12) pour la réception de solides (3) à des positions localement séparées les unes des autres, le support (3) étant incliné relativement au détecteur de sorte que les positions individuelles des solides soient disposées à des distances différentes relativement au détecteur (8).

**Fig. 1**

Fig. 2

*Fig. 3* MASSENSPEKTRUM EINER BEISPIELMESSUNG